Europäisches Patentamt

European Patent Office

Office européen des brevets

(19)

(11) Numéro de publication: **0 429 374 A1**

## (12) DEMANDE DE BREVET EUROPEEN

(21) Numéro de dépôt: 90420484.9

(22) Date de dépôt: **12.11.90**

(51) Int. Cl.⁵: **B64D 17/02**, B64D 17/30, B64C 31/02

(30) Priorité: **10.11.89 FR 8914886**

(43) Date de publication de la demande:
**29.05.91 Bulletin 91/22**

(84) Etats contractants désignés:
**CH DE IT LI**

(71) Demandeur: **Dantand, Stéphane (SCORPIO)**
**Rue des Gentianes**
**F-74200 Thonon les Bains(FR)**

(72) Inventeur: **Dantand, Stéphane (SCORPIO)**
**Rue des Gentianes**
**F-74200 Thonon les Bains(FR)**

(54) **Coussin d'air ou d'eau pour harnais.**

(57) Harnais de Deltaplane ou Sellette de parapente utilisant un coussin d'air ou d'eau pour le confort et la protèction.

Le(s) coussin(s) peut être soit inclus dans le Harnais ou la sellette soit à l'extèrieur.

La dispositif selon l'invention est particulièrement dèstiné aux pilotes d'engins lègers.

FIG 5

EP 0 429 374 A1

Cette invention concerne l'insertion d'un ou de deux coussins d'air ou d'eau pour les Harnais de delta et de parapente.

Lorsque le pilote est couché ou assis dans le harnais, le tissu qui l'entoure provoque des points de compression sur tout le corps. En effet, le pilote est directement en contact avec le Tissu. Il y a donc des parties du corps (Thorax, Bassin, Genoux, dos, ...) qui provoquent des douleurs, lorsque le pilote est en l'air et qui sont particulierement exposées en cas d'accident.

Le dispositif selon l'invention permet de remédier à ces inconvénients. La caractéristique fondamentale est l'insertion ou de(s) coussin(s) d'air ou d'eau entre le pilote et le Harnais.

Le(s) coussin(s) peuvent être placé(s) soit dans une poche spécialement conçue à cet effet, soit dans une poche interne au Harnais ou à la sellette.

Ce(s) coussin(s) sont souples afin de permettre le gonflage. Il peut être en différents matériaux. Par exemple, tous les types de PVC qui sont résistants et souples s'adapteraient à cette utilisation (Polyuréthane,...). L'épaisseur du plastique est importante car suivant l'épaisseur le(s) coussin(s) seront plus ou moins confortables et protégeront.

Le(s) coussin(s) doivent aussi posséder des emplacement qui se rejoignent afin que l'épaisseur soit constante sur toute la longueur.

Ces points peuvent être de formes diverses (en long, en rond, ...).

L'important est qu'elles soient judicieusement réparties afin de créer un confort maximal et ne pas trop nuire à la protection.

Généralement, les points qui se rejoignent sont des soudures à chaud du plastique. Mais tous autres procédés qui maintiendraient les côtés joints seraient valables.

Le(s) coussin(s) peuvent aussi être une juxtaposition de compartiments reliés entre eux mais qui communiqueraient pour répartir l'air à l'intérieur.

La valve doit être située judicieusement afin de ne pas faire un point d'appui sur le pilote et être en facilement accessible. La valve est composée d'un bouchon et éventuellement d'un système d'anti-retour. On peut utiliser une valve qui se replie sur elle-même pour éviter qu'elle fasse mal au pilote. Elle peut être de divers calibres proportionnellement à la taille du coussin. Il est important en cas d'utilisation de lest que la valve soit plus grosse pour faciliter l'écoulement de l'eau et qu'elle soit orientée vers l'extérieur.

Le pilote doit donc avant le decollage gonfler le(s) coussin(s) ou les remplir d'eau. Mais le(s) coussin(s) peuvent rester gonflé(s) ou remplis.

Les avantages de l'utilisation des coussins sont nombreux. Ils sont souples et donc faciles à l'emploi. Ils sont légers puisqu'ils sont remplis d'air et fabriqués en PVC. Ils peuvent contenir de l'eau et offrent la possibilité de se lester. Ils sont interchangeables ce qui permet de les remplacer en cas de crevaison...

En vol, le(s) coussin(s) epouse(nt) les formes du corps s'ils sont placés contre le pilote ce qui supprimerait les points de compression.

S'ils sont situés au milieu de la sellette ou à l'extérieur leur rôle de protection serait d'avantage accentué. Pendant le Vol lorsque le pilote bouge la pression va diminuer a l'emplacement de l'appui et se répartir dans tout le coussin ce qui permet ou pilote de pouvoir bouger sans être compressé.

Le(s) coussin(s) peuvent avoir plusieurs formes mais la découpe la plus efficace sera celle qui sera la plus hergonomique et qui reprendra la forme du dos ou du ventre du pilote. On peut aussi fabriquer le(s) coussin(s) en forme de multi-modules que l'on pourrait rajouter ou supprimer.

Pour le(s) coussin(s) fabriqués avec des compartiments, il est préférable que ces derniers correspondent les uns au autres afin que l'épaisseur soit constante.

Pour éviter une crevaison en cas de chutte contre un rocher, on peut protéger le coussin avec une coque plastique ou des lattes rigides (en plastique ou en bois). Ce qui va augmenter les qualités d'absorption du coussin en répartissant le point d'impact.

On peut aussi imaginer l'utilisation de deux coussins sur le même harnais ou la même sellette : près du corps qui procurerait du confort, l'autre sur l'exterieur qui garantirait une protection maximale.

Le(s) coussin(s) peuvent etre de plusieurs longueurs et largeurs suivant les parties que l'on veut protéger. Plus le(s) les coussins entour le pilote, plus se dernier est protéger et en position confortable.

Modes particuliers de réalisation :

-le(s) coussin(s) peuvent être réalisés en différentes épaisseurs et matériaux et selon diverses formes. L'épaisseur de(s) coussin(s) est importante. En effet, plus le(s) coussin(s) sont epais plus le confort et la protection sont accentués.

-la valve doit avoir un accès facile afin de permettre de souffler aisement et éventuellement de larguer l'eau si le(s) coussin(s) ont été remplis.

-afin que le(s) coussin(s) ai (aient) une forme plate, les deux côtés se touchent par endroits.

-Pour l'insertion du système dans le Harnais deux solutions sont possibles :

1) Fabriquer une poche spéciale sur le harnais existant qui peut être sur l'extérieur ou l'intérieur.

2) Insérer le(s) coussin(s) entre les deux tissus qui forment le harnais proprement dit.

Les dessins annexes illustrent l'invention :

La figure 1 représente le dispositif de côté.

La figure 2 représente différents types de(s) coussins.

La figure 3 représente le dispositif de face.

La figure 4 représente le pilote larguant le lest.

La figure 5 représente le coussin inséré dans la sellette avec la possibilité de rajouter une coque rigide.

La figure 6 représente le positionnement d'un coussin par l'avant.

L'aile delta vient se positionner sur le haut du Harnais.

Les ficelles sur le haut du harnais permettent de régler l'inclinaison du pilote.

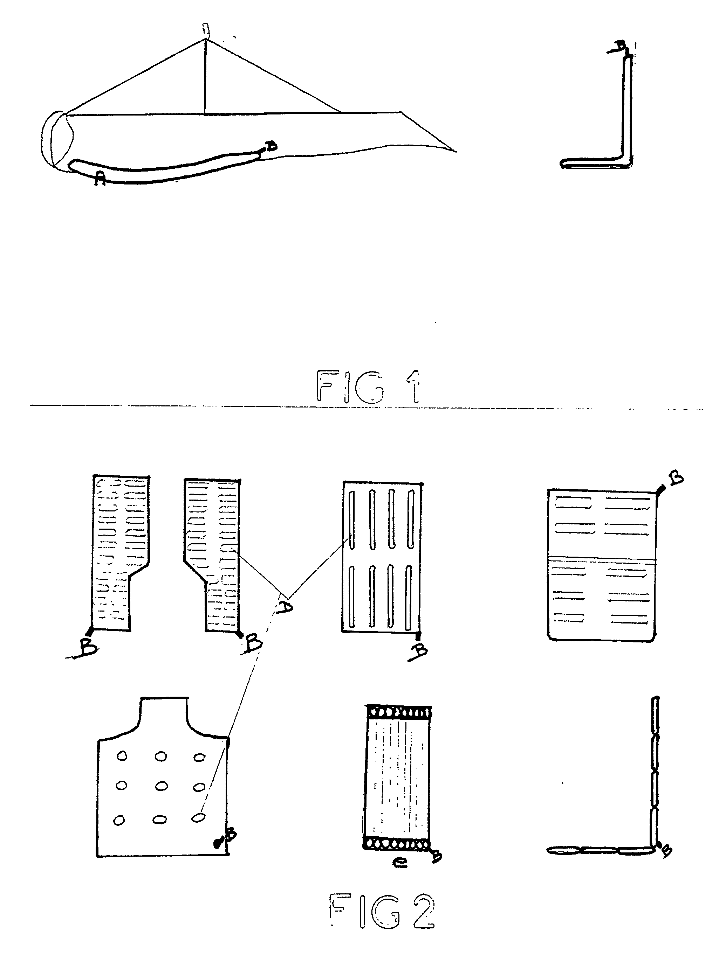

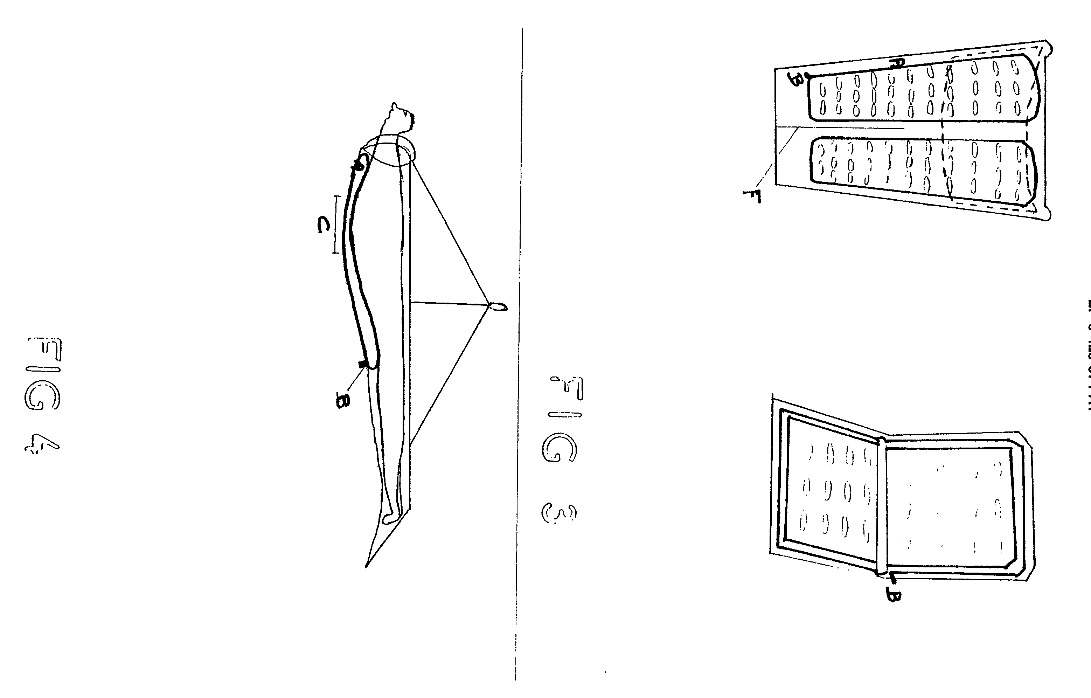

En référence à ces dessins, le dispositif se situe entre le corps et le tissu (emplacement A Figure 1 4 et 6). Ou dans le dos (figure 5).

Ce dernier comprend une valve (emplacement B). Qui peut être a divers endroits et de plusieurs épaisseurs (Figure 1 2 3 4 5 6).

Le poids du pilote va donner la forme au(x) coussin(s) (emplacement c Figure 4). L'épaisseur du coussin est importante pour protéger le pilote (Figure 5).

La dimension du (des) coussin(s) est donnée par rapport aux points de compression et aux parties que l'on veut protéger.

FIGURE 1 : Vue de côté sans le pilote, a gauche Harnais Delta a Droite Sellette de parapente. Vue d'un emplacement possible du dispositif.

FIGURE 2 : Différents formes de coussins avec (emplacement D) plusieurs types de soudures (en long, en rond, en hauteur, ...). Le coussin (emplacement e) a la particularité d'avoir des cloisons a l'intérieur qui peuvent être ou indépendante ou communicatives.

FIGURE 3 : Vue du Harnais Delta à gauche de face par dessous. Afin de montrer la répartition du coussin sur la largeur. Idem a droite pour la sellette parapente. Les pointillés représentent l'emplacement du parachute (ou l'appui est important). L'emplacement f représente la fermeture, ce qui justifie deux coussins pour le Harnais Delta.

FIGURE 4 : Pilote en position de vol utilisant de l'eau. On remarque que la valve sort a l'extérieur du Harnais pour faciliter le larguage. Le coussin s'adapte aux différentes morphologies (emplacement c).

FIGURE 5 : Positionnement du dispositif dans le dos intégré à la sellette. Avec (emplacement g) une autre protection, exemple lattes en matière plastique (emplacement h) pour augmenter la protection en cas de chute contre un objet pointu.

La sellette peut être aussi modulaire en utilisant par exemple une fermeture éclaire (emplacement e).

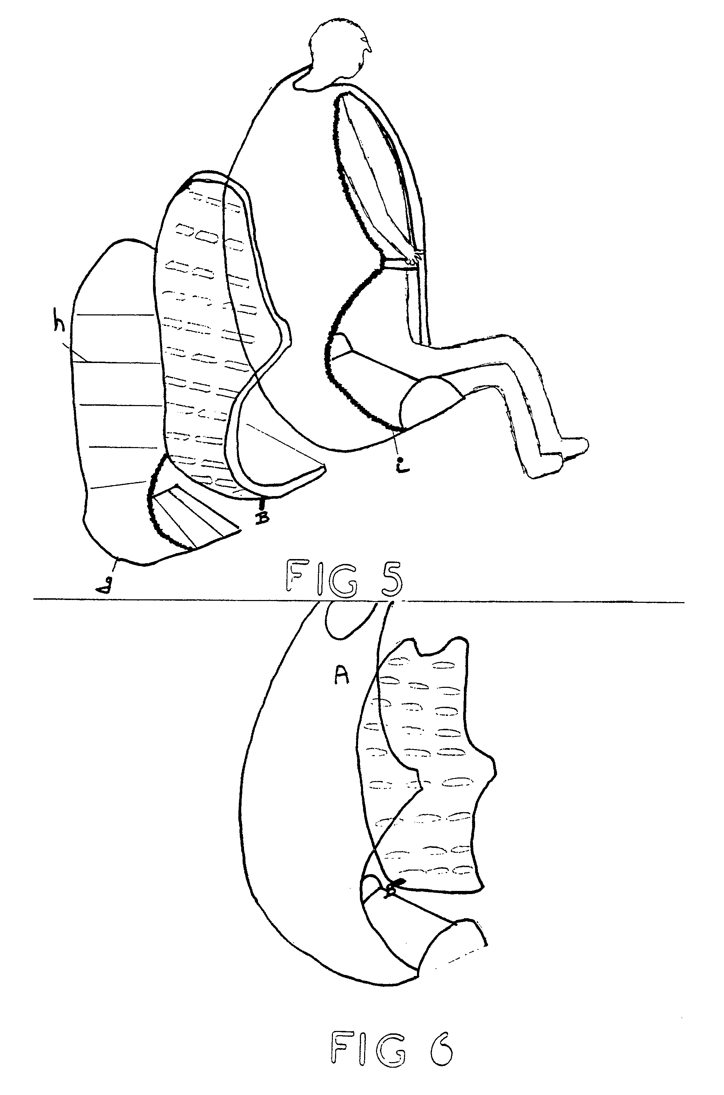

FIGURE 6 : Disposition du coussin par l'avant. Coussin en forme hergonomique. Cette version prend moins de place, mais protège Moins. La souplesse du coussin permet de prendre toutes les formes.

Le dispositif selon l'invention est particulièrement destiné aux utilisateurs de planeurs ultra-legers souples.

**Revendications**

1. Harnais de deltaplane ou de parapente caractérisé par un coussin d'air ou d'eau utilisé entre le pilote et le harnais ou a l'extérieur de la sellette afin d'améliorer le confort et la protection.

2. Harnais selon revendication 1 caractérisé par le fait que le coussin est en PVC souple, gonflable permettant d'épouser le corps et de diminuer les points de compression.

3. Harnais selon la revendication 1 et 2 caractérisé par le fait que le système est généralement composé d'une valve pour permettre le gonflage.

4. Harnais selon la revendication 1 caractérisé en ce qu'il est prévu avantageusement de mettre de l'eau dans ces coussins d'air afin de se lester (prendre du poids pour augmenter sa vitesse).

FIG 1

FIG 2

4

FIG 3

FIG 4

FIG 5

FIG 6

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | DE-U-8 604 069 (ENGELS)<br>* Page 3, lignes 3-17; page 4, lignes 5-9; page 5, lignes 12-15 *<br>— — — | 1,2 | B 64 D 17/02<br>B 64 D 17/30<br>B 64 C 31/02 |
| A | FR-A-2 524 810 (SANTONCINI)<br>* Page 1, lignes 4-12; page 3, lignes 11-12 *<br>— — — | 1 | |
| A | CA-A-1 140 092 (LOUDEN PRODUCTS LTD)<br>* Page 2, lignes 10-28 *<br>— — — | 1 | |
| A | DE-U-8 905 793 (VONBLON)<br>* Page 2, ligne 29 - page 3, ligne 10 *<br>— — — — — | 1 | |

|  | DOMAINES TECHNIQUES RECHERCHES (Int. Cl.5) |
|---|---|
|  | B 64 C<br>B 64 D<br>B 60 R<br>A 62 B<br>B 63 B |

Le présent rapport de recherche a été établi pour toutes les revendications

| Lieu de la recherche | Date d'achèvement de la recherche | Examinateur |
|---|---|---|
| La Haye | 06 février 91 | HAUGLUSTAINE H.P.M. |